# EUROPEAN PATENT APPLICATION

(11) **EP 1 344 619 A1**
(43) Date of publication of application: **17.09.2003**
(21) Application number: 03075661.3
(22) Date of filing: 07.03.2003
(51) Int. Cl.: B29C 33/00, B29C 44/58

(54) **Mould for manufacturing a mattress out of foam and foam mattress made with it**

(30) Priority: 14.03.2002 BE 200200185
(71) Applicant: Artilat Naamloze Vennootschap, 2560 Nijlen (BE)
(72) Inventor: Groenweghe, Ronald, 8510 Marke (BE)
(74) Representative: Donné, Eddy

(57) **Abstract**

Mould for manufacturing a mattress out of foam, in particular latex foam, which mould is provided with protrusions (3) on the inside in order to form cavities in the mattress, characterised in that at least a number of the protrusions (3) have a far end (5) made of an elastic material with which they fit up to an opposite part of the mould when the mould is closed, for example an opposite protrusion (3).

## Description

The present invention concerns a mould for manufacturing a mattress out of foam, in particular latex foam, which mould is provided with protrusions on the inside, preferably in the form of pins, in order to form cavities in the mattress.

The invention in particular concerns a mould designed to be filled, for example by means of injection or, while it is open, with synthetic or natural latex foam that is so to say 'vulcanised' as a result of the heating in the mould.

The mould conventionally consists of a base and a lid which can move in relation to this base. Base and lid may form equally large halves.

Mattresses made of foam, in particular of latex, are usually provided with cavities in order to lend a specific profile to the mattress, but also to provide a varying softness to it, depending on the place, so that the body of the user of the mattress can be supported more evenly.

In order to obtain such cavities, the mould is provided with the aforesaid protrusions which, just as the walls of the mould, are usually made of aluminium.

Cavities are provided on either side, opposite to each other, and to this end, protrusions are erected opposite to one another, both on the base and on the lid.

Even when the opposite protrusions practically make contact, it appears that, after the vulcanisation, the opposite cavities do not run into one another. Mattresses formed with these known moulds do have cavities on both sides, but no continuous openings.

Openings which continue over the thickness of the mattress offer the advantage that they allow for ventilation.

The invention aims a mould with internal protrusions which remedies said disadvantage and which makes it possible to form continuous openings over the thickness of the mattress in a simple manner.

This aim is reached according to the invention in that at least a number of the protrusions have a far end made of an elastic material with which they fit up to an opposite part of the mould when the mould is closed, for example an opposite protrusion.

The mould preferably comprises a base and a lid, and opposite protrusions are provided on the base and on the lid, and at least a number of the protrusions on the base, as well as the opposite protrusions on the lid, have a far end made of an elastic material, whereby these protrusions on the base and the protrusions on the lid fit up to one another with their far ends made of an elastic material when the mould is closed.

The far end made of an elastic material may be a hat provided on the rest of the pin.

When the hat is not deformed, there may be a hollow space between the hat and the body.

The hat can be made of plastic.

The invention also concerns a mattress made by means of the mould according to any of the preceding embodiments, in particular such a mould made of foam, in particular latex, provided with diagonal openings.

In order to better explain the characteristics of the invention, the following preferred embodiment of a mould for manufacturing a mattress out of foam and a foam mattress made with it according to the invention is described as an example only without being limitative in any way, with reference to the accompanying drawings, in which:
figure 1 schematically represents a section of a mould according to the invention;
figure 2 represents the part indicated with F2 in figure 1 to a larger scale, with a local cut;
figure 3 represents a section of a pin of the mould from the preceding figures.

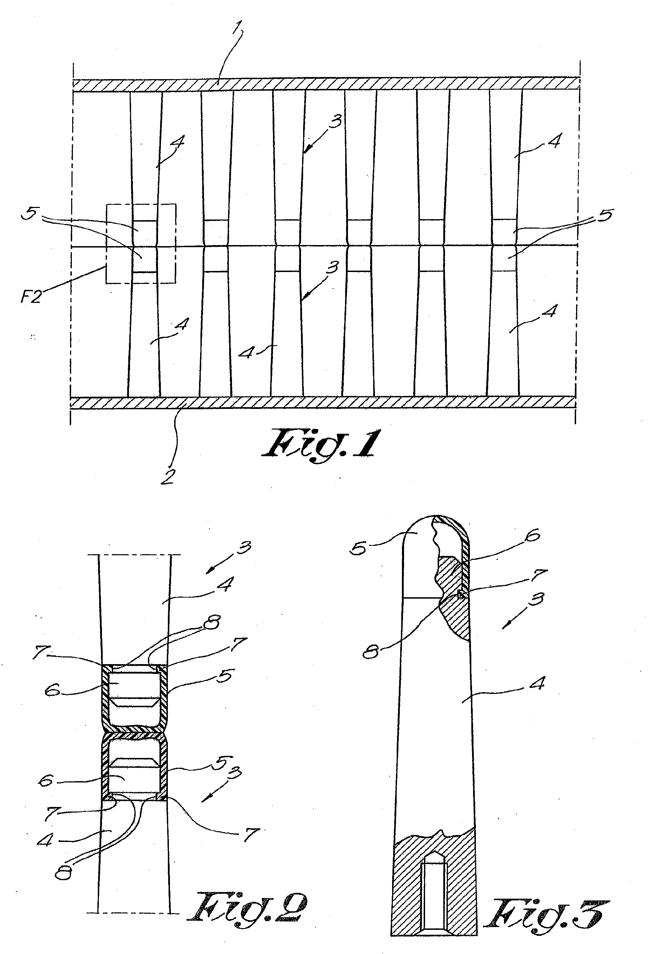

The mould represented in figures 1 and 2 for the injection of latex to form a mattress out of foam consists of a base 1 and a lid 2 which can be removed from the base 1 in order to take out the mattress. The base 1 and the lid 2 are made of aluminium.

On the bottom of the base 1 as well as on the top wall of the lid 2 are provided protrusions in the shape of pins 3 on the inner side of the mould.

As is represented in detail in figure 3, each pin 3 consists of a solid body 4 which is slightly conical towards the end, made of aluminium, and of a far end formed of a hat 5 made of an elastic, deformable plastic, fixed on the body 4.

The body 4 is fixed to the base 1 or the lid 2 by means of a bolt. The hat 5 snaps in the body 4.

To this end, the body 4 has a head 6 with a smaller diameter whose perimeter is provided with a groove 7, there where it fits up to the rest of the body 4, whereas the hat 5 has an inwardly directed collar 8 which fits in the groove 7.

The outer diameter of the hat 5 is equal to the diameter of the body 4 against this hat 5, so that the hat forms a smooth whole with the body 4. The top of the hat 5 is round when it is not deformed.

A hollow space remains between the head 6 and the top of the hat 5, so that this hat 5 can easily be deformed. Naturally, the synthetic material of which the hat 5 is made must resist the temperature of the mould while the latex foam is being vulcanised, and the latex foam may not stick to it.

As is represented in particular in figure 2, the pens 3 have such a length that, when the mould is closed and the lid 2 seals the base, the pens 3 on the base 1 and on the lid 2 make contact while their hats 5 undergo a small elastic deformation. For clarity's sake, the hats 5 are cut in this figure 2.

As the hats 5 are pressed against one another with a small deformation, the mattress formed in the mould will have openings which extend continuously from one side wall to the other and can provide for ventilation when the bed is in use.

In order to manufacture a latex mattress with diagonal openings, the above-described mould is closed and foamed latex is injected in this mould. As a result of the heat of the mould, said latex will vulcanise, after which the mould is opened and the mattress is taken out.

The pens must not be all equal, and it is also possible that certain pens have no hats 5.

The mould does not necessarily have to be filled by injecting latex in it. The mould can also be filled while being open, after which it is closed and the vulcanisation can start.

The invention is by no means limited to the above-described embodiment represented in the accompanying drawings; on the contrary, such a mould for manufacturing a mattress out of foam and a mattress made with it can be made in all sorts of variants while still remaining within the scope of the invention.

## Claims

1. Mould for manufacturing a mattress out of foam, in particular latex foam, which mould is provided with protrusions (3) on the inside in order to form cavities in the mattress, **characterised in that** at least a number of the protrusions (3) have a far end (5) made of an elastic material with which they fit up to an opposite part of the mould when the mould is closed, for example an opposite protrusion (3).

2. Mould according to claim 1, **characterised in that** the protrusions (3) are pens.

3. Mould according to claim 1 or 2, **characterised in that** it comprises a base (1) and a lid (2), and **in that** opposite protrusions (3) are provided on the base (1) and on the lid (2), and **in that** at least a number of the protrusions (3) on the base (1), as well as the opposite protrusions (3) on the lid (2), have a far end (5) made of an elastic material, whereby these protrusions (3) on the base (1) and the protrusions (3) on the lid (2) fit up to one another with their far ends (5) made of an elastic material when the mould is closed.

4. Mould according to any of claims 1 to 3, **characterised in that** the far end (5) made of an elastic material is a hat provided on the rest of the protrusion (3).

5. Mould according to claim 4, **characterised in that** the protrusion (3) with a far end made of an elastic, deformable material comprises a body (4) and a hat (5) which fits in a groove (7) of the body (4) with an inwardly directed collar (8).

6. Mould according to claim 5, **characterised in that** the body (4) of the protrusion (3) has a head (6) with a smaller diameter and **in that** the hat (5) is provided over this head (6).

7. Mould according to any of claims 4 to 6, **characterised in that** there is a hollow space between the hat (5) and the rest of the protrusion (3) when the hat (5) is not deformed.

8. Mould according to any of claims 4 to 7, **characterised in that** the hat (5) has a round top.

9. Mould according to any of claims 4 to 8, **characterised in that** the hat (5) is made of plastic.

10. Mattress made of foam, in particular latex, manufactured with the mould according to any of the preceding claims and which is provided with diagonal openings.
